# EUROPEAN PATENT APPLICATION

(11) **EP 4 845 192 A1**
(43) Date of publication of application: **25.11.2026**
(21) Application number: 25751677.3
(22) Date of filing: 07.02.2025
(51) Int. Cl.: H04W 12/06

(54) **COMMUNICATION METHOD AND APPARATUS**

(30) Priority: 09.02.2024 CN 202410179195
(71) Applicant: Huawei Technologies Co., Ltd., Shenzhen, Guangdong 518129 (CN)
(72) Inventor: ZHU, Jintao, Shenzhen, Guangdong 518129 (CN); ZHANG, Bo, Shenzhen, Guangdong 518129 (CN); MO, Ruo, Shenzhen, Guangdong 518129 (CN); DING, Hui, Shenzhen, Guangdong 518129 (CN); LI, Zhuoming, Shenzhen, Guangdong 518129 (CN)
(74) Representative: Thun, Clemens
(86) International application number: PCT/CN2025/076301
(87) International publication number: WO 2025/168078

(57) **Abstract**

A communication method and apparatus are provided. The method includes: receiving first information and second information, where the first information is used to determine a first attribute type, and the second information indicates a terminal device; obtaining a security protected digital identity of the terminal device, where the digital identity includes a first attribute corresponding to the first attribute type; and sending the security protected digital identity. According to the method provided in this application, a network side stores an attribute of the terminal device. When the terminal device needs to use a digital identity, the terminal device may request the network side to return a digital identity including a corresponding attribute. In this way, complexity of the terminal device can be reduced, and overheads of the terminal device can be reduced.

## Description

### CROSS-REFERENCE TO RELATED APPLICATIONS

This application claims priority to Chinese Patent Application No. 202410179195.4, filed with the China National Intellectual Property Administration on February 9, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With the development of mobile communication technologies, a new video-based interactive call mode becomes a new featured call service. In new call scenarios, caller identification enhancement, digital human image communication, artificial intelligence (artificial intelligence, AI) assistant, and another series of new scenarios emerge. In these scenarios, in addition to a conventional call function, there may be various new functions, for example, an AI assistant initiates a service on behalf of a user. These scenarios may relate to interaction with external service platforms. Therefore, to improve communication security, a digital identity system of users in these scenarios needs to be improved.

A digital identity of a user mainly includes an identifier, a credential, and/or an attribute of the user. The attribute is a description of information such as a type of an entity, a frequently used internet protocol (internet protocol, IP) address, a domain, address information, and a telephone number. For example, the attribute may include location information corresponding to the digital identity, or may include service subscription information associated with an operator. There are a plurality of issuers of the attribute of the digital identity. If the attribute is stored by a terminal device, a requirement on the terminal device is high, and design complexity of the terminal device is increased.

### SUMMARY

This application provides a communication method and apparatus, to provide a solution for managing an attribute of a digital identity.

According to a first aspect, this application provides a communication method. The method is performed by a first network element or a module or chip in the first network element. The first network element may be a network element like a session management function (session management function, SMF) network element. An example in which the method is performed by the first network element is used for description. The method includes: The first network element receives first information and second information, where the first information is used to determine a first attribute type, and the second information indicates a terminal device; obtains a security protected digital identity of the terminal device, where the digital identity includes a first attribute corresponding to the first attribute type; and sends the security protected digital identity.

The first network element may receive the first information and the second information from the terminal device, and send the security protected digital identity to the terminal device; or the first network element may receive the first information and the second information from an application server, and send the security protected digital identity to the application server.

This application provides a digital identity management procedure. In this procedure, an attribute used to determine a digital identity may be stored on a network side, and the terminal device may obtain, from the network side, the digital identity including the attribute. According to the method provided in this application, the network side stores an attribute of the terminal device. When the first information and the second information are received, and it is determined that the terminal device needs to use the digital identity including the first attribute corresponding to the first attribute type, the digital identity including the first attribute is returned. In this way, complexity of the terminal device can be reduced (for example, no additional security hardware requirement is imposed on the terminal device), and overheads of the terminal device can be reduced (for example, storage and security computing consumption is reduced).

In a possible implementation, the first information is an application identifier, and the application identifier corresponds to the first attribute type; or the first information is an identifier of the first attribute type.

In the foregoing technical solution, when the first information is the first attribute type, the network side can directly determine the first attribute corresponding to the first attribute type, to improve efficiency. When the first attribute is the application identifier, a device that requests an attribute from the network side may not need to determine which attributes need to be requested, and only the network side needs to determine the first attribute type based on the application identifier, to improve efficiency.

In a possible implementation, before the first network element obtains the first attribute based on the first information and the second information, the method further includes: receiving a first identifier and an access credential, where a management module corresponding to the first identifier is configured to manage one or more attributes of the terminal device, and the one or more attributes include the first attribute; and if verification of the access credential succeeds, obtaining the first attribute from the management module corresponding to the first identifier.

In the foregoing technical solution, the access credential of the management module is verified, and then the first attribute is obtained from the management module, so that the attribute of the terminal device is not obtained by a third-party device, thereby ensuring security of the attribute of the terminal device.

In a possible implementation, before the first network element receives the first information and the second information, the method further includes: receiving first indication information and second indication information from the terminal device, where the second indication information indicates the one or more attributes, the first indication information indicates the network side to manage the one or more attributes indicated by the second indication information, and the one or more attributes include the first attribute; and creating the management module, where the management module is configured to manage the one or more attributes.

In the foregoing technical solution, the management module is created to manage the one or more attributes of the terminal device, to assist the terminal device in obtaining the attribute from an issuer of the attribute. This avoids a need for the terminal device to interact with a plurality of network elements to obtain a plurality of attributes and the network side obtains and manages the attributes. In this way, complexity of the terminal device can be reduced, and overheads of the terminal device can be reduced.

In a possible implementation, after the creating the management module, the method further includes: sending the first identifier and the access credential to the terminal device.

In a possible implementation, after the first network element receives the first information and the second information, the method further includes: obtaining the first attribute from a second network element based on the first information and the second information.

In a possible implementation, after the first network element receives the first information and the second information, the method further includes: sending the first information and the second information to a second network element; receiving third indication information from the second network element, where the third indication information indicates a fourth network element, and the fourth network element is an issuer of the first attribute; and obtaining the first attribute from the fourth network element based on the third indication information.

In the foregoing technical solution, the first attribute is obtained from the issuer of the first attribute, that is, the fourth network element, so that efficiency of obtaining the attribute can be improved.

According to a second aspect, this application provides a communication method. The method is performed by a terminal device or a module or chip in the terminal device. An example in which the method is performed by the terminal device is used for description. The method includes: sending first information and second information, where the first information is used to determine a first attribute type, and the second information indicates the terminal device; receiving a security protected digital identity of the terminal device, where the digital identity includes a first attribute corresponding to the first attribute type; and sending the security protected digital identity to an application server, where the first attribute is used to access a service of the application server.

In a possible implementation, the first information is an application identifier, and the application identifier corresponds to the first attribute type; or the first information is an identifier of the first attribute type.

In a possible implementation, before the sending the first information and the second information, the method further includes: sending a service request message to the application server, where the service request message is used to request a service; and receiving a digital identity query message from the application server, where the digital identity query message indicates to report the digital identity, and the digital identity query message includes the first information.

In a possible implementation, before the sending the first information and the second information, the method further includes: sending first indication information and second indication information, where the second indication information indicates one or more attributes, the first indication information indicates a network side to manage the one or more attributes indicated by the second indication information, and the one or more attributes include the first attribute.

In a possible implementation, after the sending the first indication information and the second indication information, the method further includes: receiving a first identifier and an access credential, where a management module corresponding to the first identifier is configured to manage the one or more attributes.

In a possible implementation, before the receiving the security protected digital identity of the terminal device, the method further includes: sending the first identifier and the access credential.

According to a third aspect, this application provides a communication method. The method is performed by a second network element or a module or chip in the second network element. An example in which the method is performed by the second network element is used for description. The method includes: The second network element receives first information and second information from a first network element, where the first information is used to determine a first attribute type, and the second information indicates a terminal device; and sending, to the first network element, a first attribute that is in an attribute of the terminal device and that corresponds to the first attribute type; or sending third indication information to the first network element, where the third indication information indicates to request the first attribute from a fourth network element, and the fourth network element is an issuer of the first attribute.

In a possible implementation, before receiving the first information and the second information from the first network element, the method further includes: receiving a first correspondence from an application server, where the first correspondence indicates a correspondence between an application identifier and the first attribute type.

In a possible implementation, the first information is an application identifier, and the method further includes: determining the first attribute type based on the application identifier and the first correspondence.

In a possible implementation, the first information is an identifier of the first attribute type.

According to a fourth aspect, this application provides a communication method. The method is performed by an application server or a module or chip in the application server. The application server may be an application function (application function, AF) network element, or may be a network element provided by a third party. An example in which the method is performed by the application server is used for description. The method includes: receiving, from a terminal device, a security protected digital identity of the terminal device, where the digital identity includes a first attribute; and verifying, based on the first attribute, whether the terminal device can access a service.

In a possible implementation, the security protected digital identity of the terminal device is in a service request message, and a service requested by the service request message is associated with the first attribute.

In a possible implementation, before the receiving the security protected digital identity of the terminal device, the method further includes:
receiving the service request message from the terminal device, where the service requested by the service request message is associated with the first attribute; and sending a digital identity query message to the terminal device, where the digital identity query message indicates to report the digital identity, the digital identity query message includes first information, the first information is used to determine a first attribute type, and the first attribute type corresponds to the first attribute.

In a possible implementation, before the receiving the security protected digital identity of the terminal device, the method further includes: sending a first correspondence to a second network element, where the first correspondence indicates a correspondence between an application identifier and the first attribute type.

According to a fifth aspect, this application provides a communication method. The method is performed by a first network element or a module or chip in the first network element. The first network element may be a network element like a session management function (session management function, SMF) network element. An example in which the method is performed by the first network element is used for description. The method includes: The first network element receives first information and second information, where the first information is used to determine a first attribute type, and the second information indicates a terminal device; determining, based on the first information and the second information, a first attribute that is in an attribute of the terminal device and that corresponds to the first attribute type; and sending the first attribute.

In a possible implementation, the first information is an application identifier, and the application identifier corresponds to the first attribute type; or the first information is an identifier of the first attribute type.

In a possible implementation, before the first network element obtains the first attribute based on the first information and the second information, the method further includes: receiving a first identifier and an access credential, where a management module corresponding to the first identifier is configured to manage one or more attributes of the terminal device, and the one or more attributes include the first attribute; and if verification of the access credential succeeds, obtaining the first attribute from the management module corresponding to the first identifier.

In a possible implementation, before the first network element receives the first information and the second information, the method further includes: receiving first indication information and second indication information from the terminal device, where the second indication information indicates the one or more attributes, the first indication information indicates a network side to manage the one or more attributes indicated by the second indication information, and the one or more attributes include the first attribute; and creating the management module, where the management module is configured to manage the one or more attributes.

In a possible implementation, after the creating the management module, the method further includes: sending the first identifier and the access credential to the terminal device. For example, the access credential includes but is not limited to a user name, a password, a token, and a certificate. This is not limited in this application.

In a possible implementation, after the first network element receives the first information and the second information, the method further includes: obtaining the first attribute from a second network element based on the first information and the second information.

In a possible implementation, after the first network element receives the first information and the second information, the method further includes: sending the first information and the second information to a second network element; receiving third indication information from the second network element, where the third indication information indicates a fourth network element, and the fourth network element is an issuer of the first attribute; and obtaining the first attribute from the fourth network element based on the third indication information.

According to a sixth aspect, this application provides a communication method. The method is performed by a terminal device or a module or chip in the terminal device. An example in which the method is performed by the terminal device is used for description. The method includes: sending first information and second information, where the first information is used to determine a first attribute type, and the second information indicates the terminal device; receiving a first attribute, where the first attribute is an attribute that is in an attribute of the terminal device and that corresponds to the first attribute type; obtaining a digital identity of the terminal device, where the digital identity includes the first attribute; and sending the security protected digital identity to an application server, where the first attribute is used to access a service of the application server.

In a possible implementation, the first information is an application identifier, and the application identifier corresponds to the first attribute type; or the first information is an identifier of the first attribute type.

In a possible implementation, before the sending the first information and the second information, the method further includes: sending a service request message to the application server, where the service request message is used to request a service; and receiving a digital identity query message from the application server, where the digital identity query message indicates to report the digital identity, and the digital identity query message includes the first information.

In a possible implementation, before the sending the first information and the second information, the method further includes: sending first indication information and second indication information, where the second indication information indicates one or more attributes, the first indication information indicates a network side to manage the one or more attributes indicated by the second indication information, and the one or more attributes include the first attribute.

In a possible implementation, after the sending the first indication information and the second indication information, the method further includes: receiving a first identifier and an access credential, where a management module corresponding to the first identifier is configured to manage the one or more attributes.

In a possible implementation, before the receiving the first attribute, the method further includes: sending the first identifier and the access credential.

According to a seventh aspect, this application further provides a communication apparatus. The communication apparatus can implement any method provided in any one of the first aspect to the sixth aspect. The communication apparatus may be implemented by hardware, or may be implemented by executing corresponding software by hardware. The hardware or the software includes one or more units or modules corresponding to the foregoing functions.

In a possible implementation, the communication apparatus includes a processor. The processor is configured to support the communication apparatus in performing a corresponding function of the first network element, the terminal device, the second network element, or the application server in the foregoing methods. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device like a terminal device.

In a possible implementation, the communication apparatus includes corresponding functional modules respectively configured to implement the steps in the foregoing methods. The function may be implemented by hardware, or may be implemented by executing corresponding software by hardware. The hardware or the software includes one or more modules corresponding to the foregoing functions.

In a possible implementation, a structure of the communication apparatus includes a processing unit and a communication unit. These units may perform corresponding functions in the foregoing method examples. For details, refer to descriptions in the method provided in any one of the first aspect to the sixth aspect. Details are not described herein again.

According to an eighth aspect, a communication apparatus is provided, including a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement a functional module of the method in any possible implementation of any one of the first aspect to the sixth aspect by using a logic circuit or by executing a computer program or instructions. Optionally, the communication apparatus further includes a memory, and the memory is configured to store a computer program or instructions.

According to a ninth aspect, a computer-readable storage medium is provided. The computer-readable storage medium stores a computer program or instructions. When the computer program or the instructions are executed by a processor, the method in any possible implementation of any one of the first aspect to the sixth aspect is implemented.

According to a tenth aspect, a computer program product storing instructions is provided. When a computer reads and executes the computer program product, the method in any possible implementation of any one of the first aspect to the sixth aspect is implemented.

According to an eleventh aspect, a circuit is provided. The circuit is configured to perform the method in any possible implementation of any one of the first aspect to the sixth aspect, and the circuit may include a chip circuit. Optionally, the circuit may be further coupled to a memory.

According to a twelfth aspect, a chip is provided. The chip includes a processor. When executing a computer program or instructions, the processor is configured to implement the method in any possible implementation of any one of the first aspect to the sixth aspect. Optionally, the chip may further include a memory. The chip may include a chip, or may include a chip and another discrete device.

According to a thirteenth aspect, a communication apparatus is provided, including a processor. The processor implements the method in any possible implementation of any one of the first aspect to the sixth aspect by using a logic circuit or by executing a computer program or instructions.

According to a fourteenth aspect, a communication apparatus is provided, including a unit or a module configured to perform the method in any possible implementation of any one of the first aspect to the sixth aspect.

According to a fifteenth aspect, an embodiment of this application further provides a communication system. The communication system includes: a first network element configured to implement the method in the first aspect and any possible implementation of the first aspect; a terminal device configured to implement the method in the second aspect and any possible implementation of the second aspect; a second network element configured to implement the method in the third aspect and any possible implementation of the third aspect; and an application server configured to implement the method in the fourth aspect and any possible implementation of the fourth aspect.

### BRIEF DESCRIPTION OF DRAWINGS

FIG. 1 is a diagram of an architecture of a network device applicable to an embodiment of this application;
FIG. 2 is a schematic flowchart of a communication method according to an embodiment of this application;
FIG. 3 is a schematic flowchart of a communication method according to an embodiment of this application;
FIG. 4 is a schematic flowchart of a communication method according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. It is clear that the described embodiments are merely some but not all of embodiments of this application. In this application, the terms "first" and "second" and corresponding term numbers are intended to distinguish between similar objects but do not necessarily describe a specific order or sequence. It should be understood that the terms used in such a way are interchangeable in proper circumstances. This is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device. A method and an apparatus provided in embodiments of this application are based on the same technical concept or based on similar technical concepts. Because problem resolving principles of the method and the apparatus are similar, mutual reference may be made to implementations of the apparatus and the method. Repeated descriptions are not described.

The method provided in embodiments of this application may be applied to various mobile communication systems, for example, internet of things (internet of things, IoT), narrowband internet of things (narrowband internet of things, NB-IoT), a 4th generation (4th generation, 4G) communication system (for example, long term evolution (long term evolution, LTE)), a 5th generation (5th generation, 5G) communication system (for example, 5G new radio (new radio, NR)), an LTE and NR hybrid architecture, or a new communication system emerging in 6G or future communication development. Alternatively, the communication system may include a machine to machine (machine to machine, M2M) network, a machine type communication (machine type communication, MTC) network, or another network.

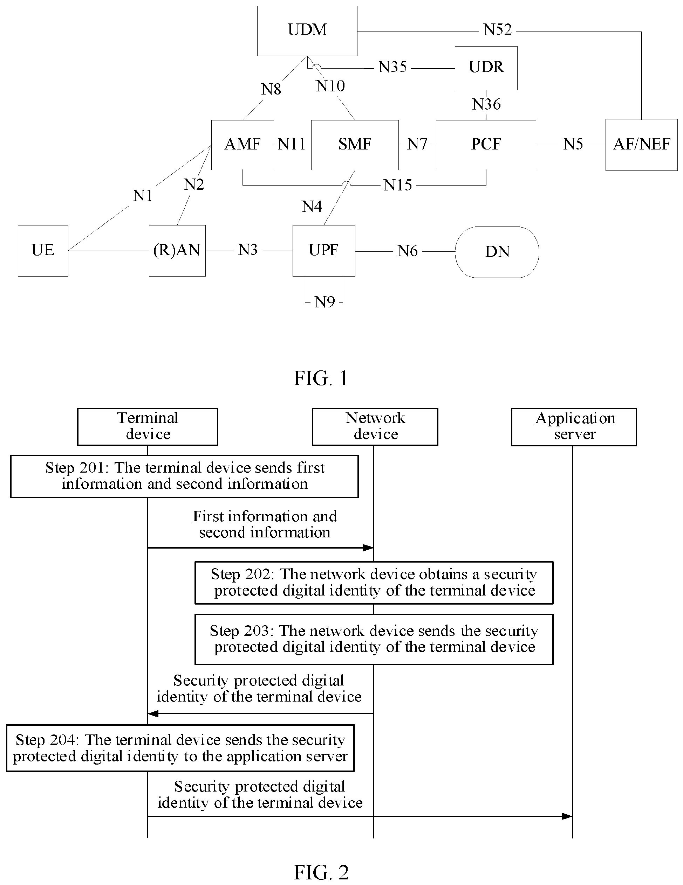

FIG. 1 is a diagram of a 5G network architecture applicable to this application. The 5G network architecture shown in FIG. 1 may include a terminal device, an access network device, and a core network (core network, CN) device. The terminal device accesses a data network (data network, DN) via the access network device and the core network device. The core network device includes a plurality of network functions (network function, NF) or network elements, for example, includes some or all of the following network elements: a unified data management (unified data management, UDM) network element, a unified database (unified data repository, UDR) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, and a user plane function (user plane function, UPF) network element, and a network repository function (network repository function, NRF) network element.

The access network device may be a radio access network (radio access network, RAN) device. For example, the radio access network device may be a base station (base station), an evolved NodeB (evolved NodeB, eNodeB), a transmission reception point (transmission reception point, TRP), a next generation NodeB (next generation NodeB, gNB) in a 5G mobile communication system, a next generation NodeB in a 6th generation (the 6th generation, 6G) mobile communication system, a NodeB in a future mobile communication system, an access node in a wireless fidelity (wireless fidelity, Wi-Fi) system, or the like. Alternatively, the radio access network device may be a module or unit that completes some functions of a base station, for example, a central unit (central unit, CU) or a distributed unit (distributed unit, DU). The radio access network device may be a macro base station, may be a micro base station or an indoor base station, or may be a relay node, a donor node, or the like. A specific technology and a specific device form that are used by the radio access network device are not limited in embodiments of this application.

The terminal device may be user equipment (user equipment, UE), a mobile station, a mobile terminal, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, self-driving, telemedicine, smart grid, smart furniture, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like. The terminal device may be a device (which may be specifically a public cloud device, a telecom cloud device, user equipment, or a network device that stores a digital person or a digital image) carrying a digital person, a digital image, or the like.

The access network device and the terminal device may be at fixed locations, or may be movable. The access network device and the terminal device may be deployed on land, including indoors or outdoors, or may be handheld or vehicle-mounted; may be deployed on a water surface; or may be deployed on a plane, a balloon, or an artificial satellite in the sky. Application scenarios of the access network device and the terminal device are not limited in embodiments of this application.

The following describes the core network device in this application.

The AMF network element includes functions such as mobility management, and access authentication/authorization. In addition, the AMF network element is responsible for transferring a user policy between the terminal device and the PCF. The SMF network element includes functions such as session management, execution of a control policy delivered by the PCF, UPF selection, and internet protocol (internet protocol, IP) address allocation for the terminal device. The UPF network element is used as an interface to the data network, and includes functions such as completion of user plane data forwarding, session/flow-level based charging statistics collection, and bandwidth limitation. The UDM network element includes functions such as performing of subscription data management, and user access authorization. The UDR network element includes functions such as storage and retrieval of subscription data, policy data, application data, and other types of data. The NEF network element is configured to support exposure of capabilities and events. The AF network element transfers a requirement of an application side for a network side, for example, a quality of service (quality of service, QoS) requirement, user status event subscription, or the like. The AF may be a third-party functional entity or an application server deployed by an operator. The PCF network element includes policy control functions such as session-level or service flow-level charging, QoS bandwidth guarantee, mobility management, and terminal device policy decision-making. The NRF network element may be configured to provide a network element discovery function, and provide, based on a request of another network element, network element information corresponding to a network element type. The NRF network element further provides network element management services, for example, network element registration, update, and deregistration, and network element status subscription and push.

The DN is a network outside an operator network. The operator network may access a plurality of DNs, and a plurality of services may be deployed on the DN, to provide services such as a data service and/or a voice service for the terminal device. For example, the DN is a private network of a smart factory, a sensor installed in a workshop of the smart factory may be a terminal device, a control server of the sensor is deployed in the DN, and the control server may provide a service for the sensor. The sensor may communicate with the control server, to obtain instructions of the control server, transfer collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

It may be understood that the foregoing network element is an example of an implementation. This application does not exclude that a network element or a device having a function of the foregoing network element has another name or another form in a 6G or updated wireless communication system.

Functions of interfaces are described as follows:
1. N7 is an interface between the PCF and the SMF, and is configured to deliver a PDU session granularity and a service data flow granularity control policy.
2. N15 is an interface between the PCF and the AMF, and is configured to deliver a UE policy and an access control related policy.
3. N5 is an interface between the AF and the PCF, and is configured to deliver an application service request and report a network event.
4. N4 is an interface between the SMF and the UPF, and is configured to transfer information between a control plane and a user plane, including delivery of a forwarding rule, a QoS control rule, a traffic statistics rule, and the like from the control plane to the user plane, and reporting of user plane information.
5. N11 is an interface between the SMF and the AMF, and is configured to: transfer PDU session tunnel information between the RAN and the UPF, transfer a control message to be sent to the UE, transfer radio resource control information to be sent to the RAN, and the like.
6. N2 is an interface between the AMF and the RAN, and is configured to transfer radio bearer control information from a core network side to the RAN, and the like.
7. N1 is an interface between the AMF and the UE, is access-irrelevant, and is configured to transfer a QoS control rule to the UE, and the like.
8. N8 is an interface between the AMF and the UDM, and is used by the AMF to obtain, from the UDM, subscription data and authentication data that are related to access and mobility management, and used by the AMF to register current mobility management-related information of the UE with the UDM.
9. N10 is an interface between the SMF and the UDM, and is used by the SMF to obtain, from the UDM, subscription data related to session management, and used by the SMF to register current session-related information of the UE with the UDM.
10. N35 is an interface between the UDM and the UDR, and is used by the UDM to obtain user subscription data information from the UDR.
11. N36 is an interface between the PCF and the UDR, and is used by the PCF to obtain policy-related subscription data and application data-related information from the UDR.
12. N52 is an interface between the UDM and the NEF, and is used by the NEF to expose a network capability to a third-party application function. For example, the third-party application function subscribes to reachability events of all users in a specific group from the UDM via the NEF.

In a current network, a user logs in to an application server by using a user name and a password, to obtain service data via the application server. However, in actual application, an identification usually has an attribute association requirement in some scenarios. For example, in a communication phase, a real identity (government or express) of a peer end or a real identity (bank) of a peer end needs to be verified. However, an existing mechanism does not support this capability currently. In a future mobile communication technology, a new service function is provided for the user. For example, in a future new call scenario, caller identification enhancement and digital human image real-person authentication may be provided for the user. In a new call scenario, caller identification enhancement, digital human images for real-person authentication, AI assistants for real-person authorization, assistants for real-person authorization, and another series of new scenarios emerge. To improve communication security, a concept of digital identity is proposed. In the future new call scenario, a digital identity of a user needs to be used. The digital identity of the user mainly includes one or more of the following: a user identifier, a credential, and an attribute.

The identifier, served as a subscription permanent identifier, uniquely identifies a digital identity entity, for example, a person, a machine (machine), a digital entity (digital person), or an intelligent entity (intelligent agent). The identifier may be allocated by a network side, for example, the identifier may be a telephone number or a network access identifier (network access identifier, NAI).

The credential is a digital authentication credential, and may be a digital certificate, a token, a biometric feature, and/or the like.

The attribute is a description of information such as a type of an entity, a frequently used internet protocol (internet protocol, IP) address, a domain, address information, and/or a telephone number. For example, the attribute may include location information corresponding to the digital identity, or may include service subscription information associated with an operator.

There are a plurality of types of attributes of the digital identity, for example, the attributes may be classified into the following types:
(1) Identity attribute: The identity attribute identifies identity information corresponding to the digital identity, for example, identity information of an individual user or identity information of an enterprise legal person. When the digital identity entity is an individual user, identity information of the individual user includes information such as a user identity card number, a user name, and a user address. When the digital identity entity is an enterprise legal person, identity information of the enterprise legal person includes information such as a social credit code of an enterprise, an enterprise name, a registered address of the enterprise, and a name of the enterprise legal person; or includes information such as subscription information associated with the operator.
(2) Status attribute: The status attribute includes information such as location information corresponding to the digital identity, a reachability status recorded in a network, or an identifier of a network element that currently provides a service for the digital identity, and supports an internal/external entity to query a status of an entity corresponding to the digital identity.
(3) Subscription attribute: The subscription attribute is service subscription information associated with the operator, including account data, subscription data, and the like, for example, information such as a list of subscribed operator services and a payment mode.
(4) Service attribute: The service attribute may include service authorization information, and may be used to record authorization information received by the digital identity and/or authorization information provided externally, for example, a received specific permission authorized by a real person (which may include an authorization purpose, authorization content, and an authorization validity period), or authorization information provided for another entity (for example, allowing another entity to use the digital identity to execute a corresponding service). Alternatively, the service attribute may be used to control an access request of the digital identity, for example, restrict the digital identity to allow only a specific/specific type of service (for example, an enterprise application or a target third-party service provider (Service Provider, SP)) to access.

Different types of attributes have different issuers. For example, the identity attribute may be from an authority, and the subscription attribute may be from an operator. In the future, the attribute of the digital identity may be increasingly multi-sourced, and interworking complexity is high. If the attribute of the digital identity is stored by the terminal device, a requirement on the terminal device is high, and design complexity of the terminal device is increased. This increases costs of the terminal device. Especially in mobile communication, some terminal devices are low-capability terminal devices, and cannot manage attributes from complex sources. Therefore, this application provides a method. A network side may store an attribute of a digital identity. When a terminal device needs to use the attribute, the terminal device may obtain the attribute from the network side, so that complexity of the terminal device can be reduced.

It may be understood that a specific structure of an execution entity of the method provided in embodiments of this application is not particularly limited in this application, and the method may be applied to a module in a terminal device or a module in a network device, provided that communication can be performed according to the method provided in embodiments of this application by running a program that records code of the method provided in embodiments of this application.

In this application, terms with a same name in embodiments are given specific meanings only when the terms appear for the first time. In other embodiments, reference may be made to the foregoing definitions. For example, if first information is used to determine a first attribute type, in procedures in FIG. 2 to FIG. 9, a function and a meaning of the first information remain unchanged.

In this application, before communicating with an application server, the terminal device may first request the attribute of the digital identity from the network side, and then send a service request message to the application server. The service request message may carry the attribute. If the application server determines that the attribute reported by the terminal device meets a requirement, the application server may authorize the terminal device to access a corresponding service. Details are described below.

FIG. 2 is a schematic flowchart of a communication method according to an embodiment of this application. In this procedure, a name of a network device is not limited. For example, the network device may be referred to as an identity management (Identity Management, IDM) network element. The network device may be an existing network element in a 4G or 5G network architecture, for example, an SMF network element, or may be a network element newly defined in a future communication system. In this application, the network device may alternatively be replaced by a plurality of network elements. For example, a function of the network device may be performed by a first network element (for example, an SMF network element), a second network element (for example, a UDM network element), and a third network element (for example, an NEF network element). To be specific, the SMF network element, the UDM network element, and the NEF network element respectively perform some functions of the network device in the following procedure. The first network element, the second network element, and the third network element may alternatively be modules in the network device, or may be devices independent of each other. The following first uses interaction between the network device and a terminal device as an example for description. An application server may provide a service for the terminal device, for example, a voice call service, an instant messaging service, or a network video service. The application server may be a network element in a mobile network, or may be a device provided by a third party. In this case, the application server interacts with the network via the NEF.

Step 201: The terminal device sends first information and second information.

Correspondingly, the network device receives the first information and the second information.

How the terminal device sends the first information and the second information is not limited in this application. For example, the terminal device may send a digital identity request message, where the digital identity request message is used to request a digital identity of the terminal device, and the digital identity request message may include the first information and the second information.

Optionally, before sending the first information and the second information, the terminal device may further first register with the network device, and establish a secure connection. A specific registration process and a process of establishing the secure connection are not limited in this application, and details are not described herein.

In this application, the second information indicates the terminal device. For example, the second information is an identifier of the terminal device. For example, the identifier of the terminal device may be a subscription permanent identifier (Subscription Permanent Identifier, SUPI), a serving-temporary mobile subscriber identity (serving-temporary mobile subscriber identity, s-TMSI), or an international mobile subscriber identity (International Mobile Subscriber Identity, IMSI) of the terminal device. This is not limited in this application.

In this application, the first information is used to determine a first attribute type, and the first attribute type corresponds to a first attribute. The first attribute type may include one or more attribute types, and each attribute type may correspond to one or more pieces of attribute information. In other words, the first attribute may include one or more attributes. In this application, the attribute type may include but is not limited to an identity attribute, a status attribute, a subscription attribute, a service attribute, and the like.

A specific implementation of the first information is not limited. For example, the first information may be an identifier of the first attribute type. The identifier of the first attribute type indicates or identifies the first attribute type, and may be specifically a name, a code name, a category, an indicator, or the like of the first attribute type. The network device may directly determine the first attribute type based on the first information. For another example, the first information is an application identifier, and the application identifier may correspond to the first attribute type. A correspondence between the application identifier and the first attribute type is preset, or the correspondence between the application identifier and the first attribute type is indicated by the network device to the terminal device in advance. An application identifier identifies a service. The service may be an application service deployed by an operator, for example, a voice call service; or the service may be an application service provided by a third party, for example, an instant messaging service or a network video service.

In an implementation, the first information is determined by the terminal device. In another implementation, the first information is from the application server. For example, before step 201, the terminal device may send a service request message to the application server, where the service request message may include an application identifier, and the service request message is used to request a service corresponding to the application identifier. If the application server determines, based on the service request message, that the service requested by the service request message is associated with the first attribute, the application server may send a digital identity query message to the terminal device, where the digital identity query message indicates to report the digital identity of the terminal device, and the digital identity query message may include the first information.

Optionally, if the first information is the application identifier, the network device may determine, based on the application identifier and a first correspondence, the first attribute type corresponding to the application identifier. The first correspondence indicates an attribute type corresponding to each of at least one application identifier. For example, the first correspondence indicates a correspondence between the application identifier and the first attribute type. The network device may store the first correspondence, and may obtain the first correspondence via the application server, or the network device may obtain the first correspondence in another manner. This is not limited in this application.

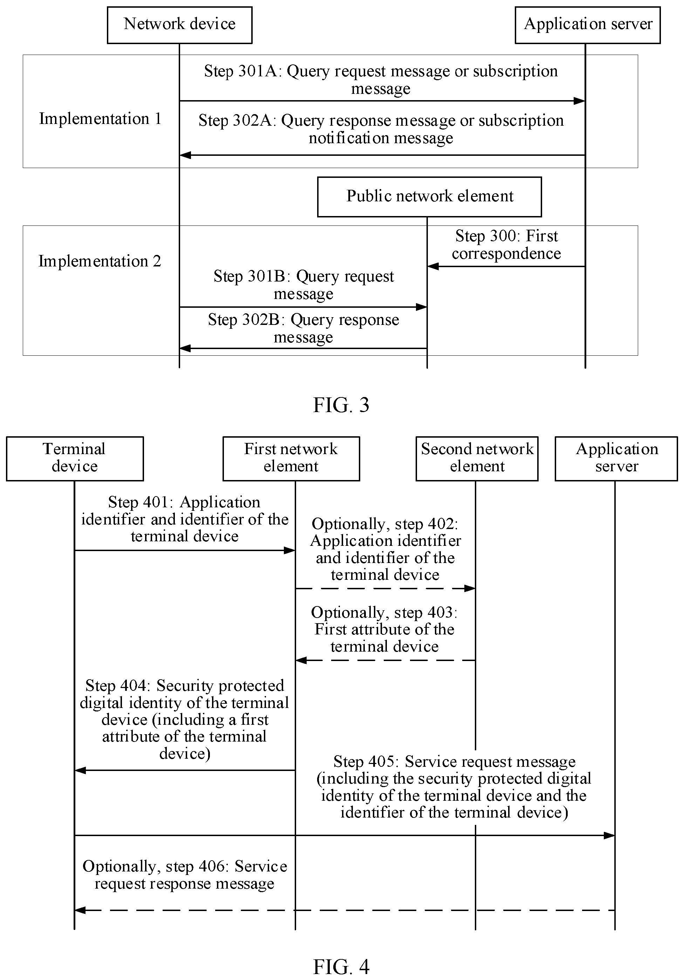

For example, as shown in FIG. 3, the network device may obtain the first correspondence in Implementation 1 or Implementation 2.

Implementation 1 includes the following procedure.

Step 301A: The network device sends a query request message or a subscription message to the application server, where the query request message is used to request a correspondence between a service and an attribute type, and the subscription message is used to subscribe to the correspondence between the service and the attribute type.

The service corresponds to an application identifier. Therefore, the correspondence between the service and the attribute type may alternatively be replaced with a correspondence between the application identifier and the attribute type.

The network device may periodically or aperiodically send the query request message, or may send the query request message when receiving the first information from the terminal device. This is not limited in this application. The application server may alternatively provide a standard open interface, and the subscription message sent by the network device may include the standard open interface, so that the correspondence between the service and the attribute type is obtained through the standard open interface.

Optionally, the query request message or the subscription message may include an application identifier, so that the application server can provide an attribute type corresponding to the application identifier.

Step 302A: The application server sends a query response message or a subscription notification message, where the query response message or the subscription notification message includes the first correspondence.

The application server indicates, to the network device by using the first correspondence, the attribute type corresponding to each of the at least one application identifier, and the network device may determine, based on the first correspondence, the attribute type indicated by the first information.

Implementation 2 includes the following procedure.

Step 300: The application server sends the first correspondence to a public network element.

The public network element may be a network element in a mobile communication network, or may be a network element provided by a third party. The public network element may also be referred to as a blockchain network element, a public repository network element, or the like.

Step 301B: The network device sends a query request message to the public network element, where the query request message is used to request a correspondence between a service and an attribute type.

The network device may periodically or aperiodically send the query request message, or may send the query request message when receiving the first information from the terminal device. This is not limited in this application.

Optionally, the query request message may include an application identifier, so that the application server can provide an attribute type corresponding to the application identifier.

Step 302B: The public network element sends a query response message, where the query response message includes the first correspondence.

In Implementation 2, the public network element may obtain correspondences between application identifiers of a plurality of application servers and attribute types. The network device does not need to interconnect with the plurality of application servers, but only needs to obtain, from the public network element, a correspondence between an application identifier of a service included in each application server and an attribute type. This reduces complexity of the network device and improves efficiency.

In the procedure shown in FIG. 3, the method performed by the network device may alternatively be performed by a network element like an NEF network element. This is not limited in this application.

In this application, a management module is a module or unit configured to manage and protect information such as the digital identity and an attribute of the terminal device. A network side may manage the information such as the digital identity and the attribute of the terminal device by using the management module. The management module may also be referred to as a digital wallet, an electronic wallet, a network wallet, or the like. The network side may allocate a dedicated management module to each terminal device. The management module may be understood as a module or unit configured to manage and protect information such as a digital identity and an attribute of the terminal device. The management module may be implemented by using software and/or hardware, and no device other than the terminal device can access information in the management module.

In a first implementation, before sending the first information and the second information, the terminal device may first request the network device to allocate a management module to the terminal device.

For example, the terminal device sends first indication information and second indication information to the network device, where the second indication information indicates one or more attributes, and the first indication information indicates the network side to manage the one or more attributes indicated by the second indication information. For example, one attribute may correspond to one attribute type, and the second indication information may be an attribute type identifier list including one or more attribute type identifiers. The network device may determine, based on the attribute type identifier list, one or more attributes that need to be managed.

The network device may create a management module for the terminal device, where the management module is configured to manage one or more attributes of the terminal device. In this implementation, the management module is only configured to manage the one or more attributes indicated by the second indication information. In the absence of an indication from the terminal device, the network device does not use the management module to manage another attribute of the terminal device. This can ensure information security of the terminal device and avoid privacy leakage.

The network device may further send a first identifier and an access credential of the management module to the terminal device. The access credential is used to determine whether there is permission to access the management module, and may be understood as a key or a password for accessing the management module.

In this implementation, when sending the first information and the second information, the terminal device may further send the first identifier and the access credential of the management module. For example, the digital identity request message may further include the first identifier and the access credential. When the network device successfully verifies the access credential, the network device obtains the first attribute corresponding to the first attribute type.

In a second implementation, before sending the first information and the second information, the terminal device does not request the network device to allocate a management module to the terminal device. In this implementation, after the terminal device sends the first information and the second information, if the network device determines that no corresponding management module is allocated to the terminal device, the network device indicates the terminal device to first request the network device to allocate a management module. The terminal device may send first indication information and second indication information, and the network device creates a management module for the terminal device based on the first indication information and the second indication information. For a specific process, refer to the foregoing descriptions.

In this implementation, the network device may reject the first attribute that corresponds to the first attribute type and that is requested this time, and the terminal device may resend the first information and the second information, and send a first identifier and an access credential of the management module.

Alternatively, the network device does not reject the first attribute that corresponds to the first attribute type and that is requested this time. After creating the management module for the terminal device, the network device may obtain one or more attributes indicated by the second indication information, and manage, in the management module, the one or more attributes indicated by the second indication information.

Step 202: The network device obtains the security protected digital identity of the terminal device.

In this application, the network device may determine, based on the first information and the second information, that an attribute requested by the terminal device is the first attribute corresponding to the first attribute type. The network device may obtain the first attribute in a plurality of manners. The following provides several possible implementations.

Implementation 1: The network device may receive the first identifier and the access credential of the management module. The management module is configured to manage one or more attributes of the terminal device, where the one or more attributes include the first attribute. If the network device successfully verifies the access credential, the network device obtains, from the management module, the first attribute corresponding to the first attribute type.

Implementation 2: The network device requests the first attribute from a fourth network element based on the first information and the second information, and receives the first attribute from the fourth network element, where the fourth network element is an issuer of the first attribute. For example, the network device determines, based on the first information and the second information, that the attribute requested by the terminal device is the first attribute corresponding to the first attribute type, and the network device sends the identifier of the first attribute type and the identifier of the terminal device to the fourth network element, or the network device sends the application identifier and the identifier of the terminal device to the fourth network element, so that the fourth network element can return the first attribute that corresponds to the first attribute type and that is in the attribute of the terminal device.

After determining that the attribute requested by the terminal device is the first attribute, the network device may directly obtain the first attribute via the fourth network element. Alternatively, the network device may first search the management module for the first attribute, and when determining that the management module does not include the first attribute, the network device then obtains the first attribute via the fourth network element. This is not limited in this application.

If the first attribute corresponding to the first attribute type includes a plurality of attributes, for example, the first attribute includes an attribute A and an attribute B, the network device may obtain, from the management module, a part of the attributes corresponding to the first attribute type, for example, obtain only the attribute A. For the other part of the attributes corresponding to the first attribute type, for example, the attribute B, the network device may obtain the attribute B via the fourth network element.

After obtaining the first attribute, the network device may determine the digital identity of the terminal device based on the first attribute. The digital identity of the terminal device may include the first attribute, and may further include other information. For example, the digital identity of the terminal device further includes information about the terminal device such as an identifier, an application identifier, a validity period of the digital identity, and/or a quantity of validity times of the digital identity.

The network device may perform security protection on the digital identity of the terminal device, to obtain the security protected digital identity of the terminal device. How the network device specifically performs security protection on the digital identity is not limited in this application.

For example, in a first implementation, the network device encrypts the digital identity of the terminal device, and the encrypted digital identity is the security protected digital identity of the terminal device.

In a second implementation, the network device performs a cryptographic operation on the identifier of the terminal device and the first attribute, to obtain a certification credential, and uses the certification credential as a part of the digital identity of the terminal device. The digital identity including the certification credential is the security protected digital identity of the terminal device. The cryptographic operation includes but is not limited to calculating a digital signature, calculating a message authentication code (Message Authentication Code, MAC), calculating a zero knowledge proof (Zero Knowledge Proof), and/or the like.

In a third implementation, the network device performs a cryptographic operation on the identifier of the terminal device and the first attribute, to obtain a certification credential, and uses the certification credential as a part of the digital identity of the terminal device. The network device then encrypts the digital identity including the certification credential, and the encrypted digital identity including the certification credential is the security protected digital identity of the terminal device.

The foregoing is merely an example. The network device may further perform security protection on the digital identity in another manner, and examples are not described herein one by one.

Step 203: The network device sends the security protected digital identity of the terminal device, where the digital identity is used to access a service of the application server.

Correspondingly, the terminal device receives the security protected digital identity of the terminal device.

The terminal device may locally store the security protected digital identity, for example, store the digital identity in a subscriber identity module (Subscriber Identity Module, SIM) card or a software development kit (software development kit, SDK) of the terminal device.

Step 204: The terminal device sends the security protected digital identity to the application server.

In an implementation, the terminal device may send the security protected digital identity through a service request message. The service request message may further include an application identifier, and the service request message is used to request a service corresponding to the application identifier.

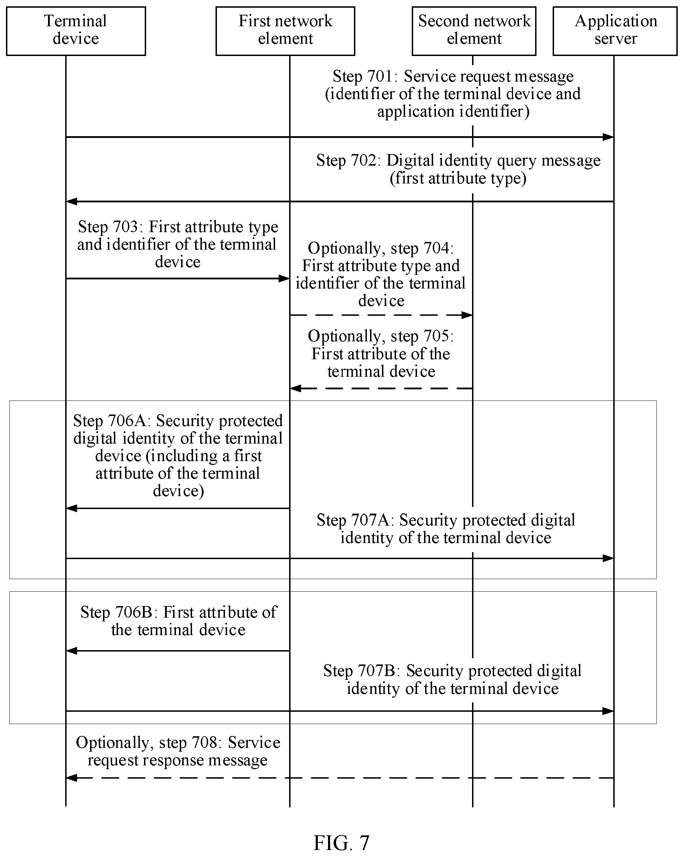

In another implementation, the terminal device may first send a service request message to the application server. When receiving a digital identity query message from the application server, the terminal device sends a digital identity query response message including the security protected digital identity to the application server. For specific content of this implementation, refer to the following descriptions in the procedure shown in FIG. 7. Details are not described herein.

In this application, the application server may provide a service corresponding to the application identifier for the terminal device. For example, the service may be an application service deployed by an operator, for example, a voice call service; or the service may be an application service provided by a third party, for example, an instant messaging service or a network video service.

The application server obtains the security protected digital identity, and may verify the security protected digital identity. For example, if the security protected digital identity of the terminal device is encrypted, the application server may decrypt the security protected digital identity of the terminal device by using a corresponding key. If the digital identity of the terminal device can be correctly decrypted, it is determined that the digital identity of the terminal device is valid.

For another example, if the security protected digital identity of the terminal device includes the certification credential, the application server may verify validity of the certification credential, and after the verification succeeds, the application server may determine that the digital identity of the terminal device is valid. How the application server verifies validity of the certification credential is not limited in this application, and details are not described herein.

Further, the first attribute in the digital identity may be used to verify whether the service of the application server can be accessed. For example, after determining that the digital identity of the terminal device is valid, the application server may further determine whether the first attribute included in the digital identity meets an attribute requirement of the service corresponding to the application identifier. Attributes required by different services may be different. Therefore, when requesting a service, the terminal device needs to include, in the digital identity, an attribute required by the service. The application server determines that the first attribute included in the digital identity meets the attribute requirement of the service corresponding to the application identifier, that is, determines, based on the first attribute included in the digital identity, that the terminal device can access the service that corresponds to a service identifier and that is in the application server. Otherwise, if the application server determines that the first attribute included in the digital identity does not meet the attribute requirement of the service corresponding to the application identifier, the application server determines that the terminal device cannot access the service that corresponds to the service identifier and that is in the application server.

Optionally, the digital identity further includes the validity period or the quantity of validity times, and the application server may further determine whether the digital identity is within the validity period, or determine whether the quantity of validity times of the digital identity is greater than 0. If the validity period of the digital identity has expired, or the quantity of valid times of the digital identity is equal to 0, the terminal device cannot access the service in the application server even if the first attribute included in the digital identity meets the attribute requirement of the service corresponding to the application identifier.

According to the method provided in this application, the network side manages the attribute of the terminal device. When the terminal device needs to use a digital identity, the terminal device may request the network side to return a digital identity including a corresponding attribute. In this way, complexity of the terminal device can be reduced, and overheads of the terminal device can be reduced.

In the foregoing procedure, the first network element (for example, the SMF network element), the second network element (for example, the UDM network element), and the third network element (for example, the NEF network element) respectively perform some functions of the network device in the procedure in FIG. 2. Specifically, FIG. 4 is a schematic flowchart of a communication method according to an embodiment of this application. In this procedure, a terminal device may first request a digital identity from a first network element, and after obtaining the digital identity, the terminal device requests a service from an application server by using the digital identity. In the following procedure, an example in which first information is an application identifier and second information is an identifier of the terminal device is used for description.

Step 401: The terminal device sends the application identifier and the identifier of the terminal device to the first network element.

For example, the terminal device may send a digital identity request message, where the digital identity request message is used to request the digital identity of the terminal device, and the digital identity request message includes the application identifier and the identifier of the terminal device.

After obtaining the application identifier and the identifier of the terminal device, the first network element obtains a corresponding first attribute. Specifically, if the first network element does not store the first attribute that is in an attribute of the terminal device and that corresponds to a first attribute type corresponding to the application identifier, step 402 may be performed. If the first network element stores the first attribute, step 404 may be directly performed.

Optionally, step 402: The first network element sends the application identifier and the identifier of the terminal device to a second network element.

Optionally, step 403: The second network element sends the first attribute of the terminal device to the first network element.

There may be a plurality of implementations of how the second network element obtains the first attribute of the terminal device based on the application identifier and the identifier of the terminal device. For example, in Implementation 1, if the second network element already stores the first attribute, the first attribute may be directly obtained. For example, the first attribute includes an attribute A and an attribute B. If the second network element stores the attribute A and the attribute B of the terminal device, the second network element directly sends the attribute A and the attribute B to the first network element.

In Implementation 2, if the second network element can directly communicate with a fourth network element (that is, an issuer of the first attribute), the second network element directly obtains the first attribute via the fourth network element. If the second network element cannot directly communicate with the fourth network element (that is, the issuer of the first attribute), the second network element may request the first attribute from the fourth network element via a third network element.

For example, if the first attribute includes an attribute A and an attribute B, and the second network element determines that an issuer of the attribute A and the attribute B is the fourth network element, the second network element obtains the attribute A and the attribute B from the fourth network element.

Optionally, in another implementation, the second network element may alternatively send third indication information to the first network element, where the third indication information indicates a fourth network element. In this way, the first network element may obtain the first attribute from the fourth network element based on the third indication information.

The third indication information may be address information or an identifier of the fourth network element. How the second network element or the third network element determines the address information or the identifier of the fourth network element is not limited in this application. For example, the second network element or the third network element may determine the fourth network element based on a correspondence between the first attribute type and the address information or the identifier of the fourth network element. The correspondence is preset or preconfigured. Alternatively, the first attribute type may include the address information or the identifier of the fourth network element, and the second network element or the third network element may determine the fourth network element based on the address information or the identifier of the fourth network element in the first attribute type.

Step 404: The first network element obtains the digital identity of the terminal device, and sends the security protected digital identity of the terminal device to the terminal device.

The security protected digital identity of the terminal device includes the identifier of the terminal device and the first attribute, and may further include information such as a certification credential. For details, refer to the descriptions in step 203. Details are not described herein again.

Step 405: The terminal device sends a service request message to the application server.

The service request message includes information such as the security protected digital identity of the terminal device, the identifier of the terminal device, and the application identifier, and the service request message is used to request a service corresponding to the application identifier.

The application server may verify the security protected digital identity. If the application server determines that the digital identity of the terminal device is valid, and determines, based on the first attribute in the digital identity, that the terminal device can access a service of the application server, the application server may provide the service corresponding to the application identifier for the terminal device. For a specific process, refer to the descriptions in step 204. Details are not described herein again.

Optionally, step 406: The application server sends a service request response message to the terminal device, where the service request response message may indicate that the application server agrees to provide the service corresponding to the application identifier for the terminal device. For details, refer to the descriptions of the embodiment shown in FIG. 2.

In this application, a network side may manage information such as the attribute and the digital identity of the terminal device by using a management module. There may be a plurality of implementations in which the network side creates a management module configured to manage the attribute of the terminal device.

In an implementation, before step 401 in the foregoing procedure, the terminal device may request the network side to create the management module configured to manage the attribute of the terminal device. In this implementation, the terminal device may further send a first identifier and an access credential of the management module. After successfully verifying the access credential, the first network element obtains, based on the application identifier and the identifier of the terminal device, the first attribute corresponding to the first attribute type.

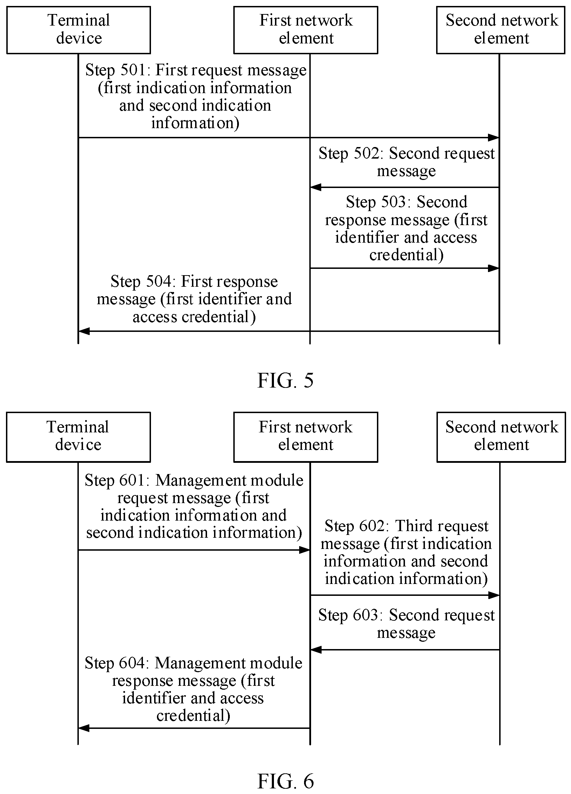

For example, as shown in FIG. 5, a process in which the terminal device requests the network side to create the management module may include the following procedure:
Step 501: The terminal device sends a first request message to the second network element.

The first request message may be a message of the terminal device in a user subscription process, or the first request message may be a message sent by the terminal device at any moment after the terminal device accesses a network. The first request message may include the identifier of the terminal device, first indication information, and second indication information. The second indication information indicates one or more attributes, and the first indication information indicates the network side to manage the one or more attributes indicated by the second indication information.

Optionally, the second network element may first determine that the management module can be created for the terminal device, and then create the management module for the terminal device. For example, the second network element determines, based on subscription information of the terminal device, that management of the attribute of the terminal device on the network side is supported. It should be understood that the subscription information may be stored in the second network element or obtained by the second network element from another network element.

In this application, the second network element may create the management module for the terminal device, or may indicate the first network element to create the management module for the terminal device. The following uses an example in which the first network element is indicated to create the management module for the terminal device for description.

Step 502: The second network element sends a second request message to the first network element, where the second request message may indicate to create the management module.

The second request message includes the identifier of the terminal device and the second indication information. An example in which the second request message includes the second indication information is used for description. Alternatively, the second request message may include new indication information, for example, fourth indication information, based on the second indication information. A function of the fourth indication information is the same as a function of the second indication information.

Step 503: The first network element creates the management module for the terminal device, and sends a second response message to the second network element.

The second response message includes information such as the identifier of the terminal device, and the first identifier and the access credential of the management module.

Step 504: The second network element sends a first response message to the terminal device.

The first response message includes information such as the first identifier and the access credential of the management module.

In another implementation, before sending the application identifier and the identifier of the terminal device, the terminal device does not request the network side to allocate the management module to the terminal device. In this implementation, after the terminal device sends the application identifier and the identifier of the terminal device, that is, after step 401, the first network element indicates the terminal device to trigger the creation of the management module. The first network element may send, to the terminal device, a message used to trigger the terminal device to trigger the creation of the management module. A specific name of the message is not limited. For a specific procedure of the terminal device triggering the creation of the management module, refer to the procedure shown in FIG. 6.

Step 601: The terminal device sends a management module request message to the first network element.

The management module request message may also be referred to as another name, for example, an access message or a registration message. The management module request message is used to request the network side to create the management module configured to manage the attribute of the terminal device. The management module request message may include the identifier of the terminal device, the first indication information, and the second indication information.

There are two cases of creating the management module: Case 1: The first network element may directly create the management module for the terminal device. Case 2: The first network element may create the management module for the terminal device after determining, via the second network element, that the management module can be created for the terminal device. In Case 2, the second network element may determine, based on the subscription information of the terminal device, whether the management of the attribute of the terminal device on the network side is supported.

The following uses Case 2 as an example for description.

Step 602: The first network element sends a third request message to the second network element.

The third request message includes the identifier of the terminal device, the first indication information, and the second indication information. The third request message may be used to request to determine whether the management module can be created for the terminal device.

If the second network element determines, based on the subscription information of the terminal device, that the management of the attribute of the terminal device on the network side is supported, the second network element determines that the management module can be created for the terminal device, and indicates the first network element to create the management module for the terminal device. The subscription information may be stored in the second network element or obtained by the second network element from another network element.

The second network element may directly create the management module for the terminal device, or may indicate the first network element to create the management module for the terminal device. The following uses an example in which the first network element is indicated to create the management module for the terminal device for description.

Step 603: The second network element sends a second request message to the first network element, where the second request message may indicate the first network element to create the management module.

The second request message includes the identifier of the terminal device and the second indication information, and the second request message indicates to create the management module for the terminal device.

Step 604: The first network element creates the management module for the terminal device, and sends a management module response message to the terminal device.

The management module response message includes information such as the identifier of the terminal device, and the first identifier and the access credential of the management module.

After the foregoing procedure, the network side creates the management module for the terminal device, and manages the attribute of the terminal device.

In the procedure shown in FIG. 4, the terminal device first requests the digital identity from the network side, and then includes the digital identity to request the service from the application server. Alternatively, in this application, the terminal device may first request the service from the application server, and then report the digital identity based on an indication of the application server. For details, refer to the following procedure.

FIG. 7 is a schematic flowchart of a communication method according to an embodiment of this application. In this procedure, a first network element (for example, an SMF network element), a second network element (for example, a UDM network element), and a third network element (for example, an NEF network element) respectively perform some functions of the network device in the procedure in FIG. 2. In this procedure, an example in which first information is a first attribute type and second information is an identifier of a terminal device is used for description.

Step 701: The terminal device sends a service request message to an application server.

The service request message includes information such as the identifier of the terminal device and an application identifier.

Step 702: The application server sends a digital identity query message to the terminal device, where the digital identity query message indicates to report a digital identity of the terminal device.

The application server may include, in the digital identity query message, the first attribute type corresponding to the application identifier.

Step 703: The terminal device sends the first attribute type and the identifier of the terminal device to the first network element.

For example, the terminal device may send a digital identity request message, where the digital identity request message is used to request the digital identity of the terminal device, and the digital identity request message includes the first attribute type and the identifier of the terminal device.

Optionally, if the first network element determines that a first attribute corresponding to the first attribute type is not included, step 704 may be performed. If the first network element determines that the first attribute corresponding to the first attribute type is included, step 706A may be directly performed.

Optionally, step 704: The first network element sends the first attribute type and the identifier of the terminal device to the second network element.

Optionally, step 705: The second network element sends the first attribute of the terminal device to the first network element.

There may be a plurality of implementations of how the second network element obtains the first attribute of the terminal device based on the first attribute type and the identifier of the terminal device. For details, refer to the descriptions in step 403. Details are not described herein again.

Step 706A: The first network element obtains the digital identity of the terminal device, and sends the security protected digital identity of the terminal device to the terminal device.

The security protected digital identity of the terminal device includes the identifier of the terminal device and the first attribute, and may further include information such as a certification credential. For details, refer to the descriptions in step 203. Details are not described herein again.

Step 707A: The terminal device sends the security protected digital identity of the terminal device to the application server.

In the foregoing procedure, step 706A and step 707A may be replaced with step 706B and step 707B.

Step 706B: The first network element sends the first attribute of the terminal device to the terminal device.

Step 707B: The terminal device obtains the digital identity of the terminal device, and sends the security protected digital identity of the terminal device to the application server.

Optionally, the determined digital identity of the terminal device may include the first attribute and a second attribute, and the second attribute is an attribute of the terminal device.

The application server may verify the security protected digital identity. If the application server determines that the digital identity of the terminal device is valid, and determines, based on the first attribute in the digital identity, that the terminal device can access a service of the application server, the application server may provide a service corresponding to the application identifier for the terminal device. For a specific process, refer to the descriptions in step 204. Details are not described herein again.

Optionally, step 708: The application server sends a service request response message to the terminal device, where the service request response message may indicate that the application server agrees to provide the service corresponding to the application identifier for the terminal device.

In the foregoing procedure, the terminal device requests, from a network side, the digital identity including the attribute of the terminal device, and sends the security protected digital identity of the terminal device to the application server. In this application, alternatively, the network side may directly send the security protected digital identity of the terminal device to the application server. Details are described below.

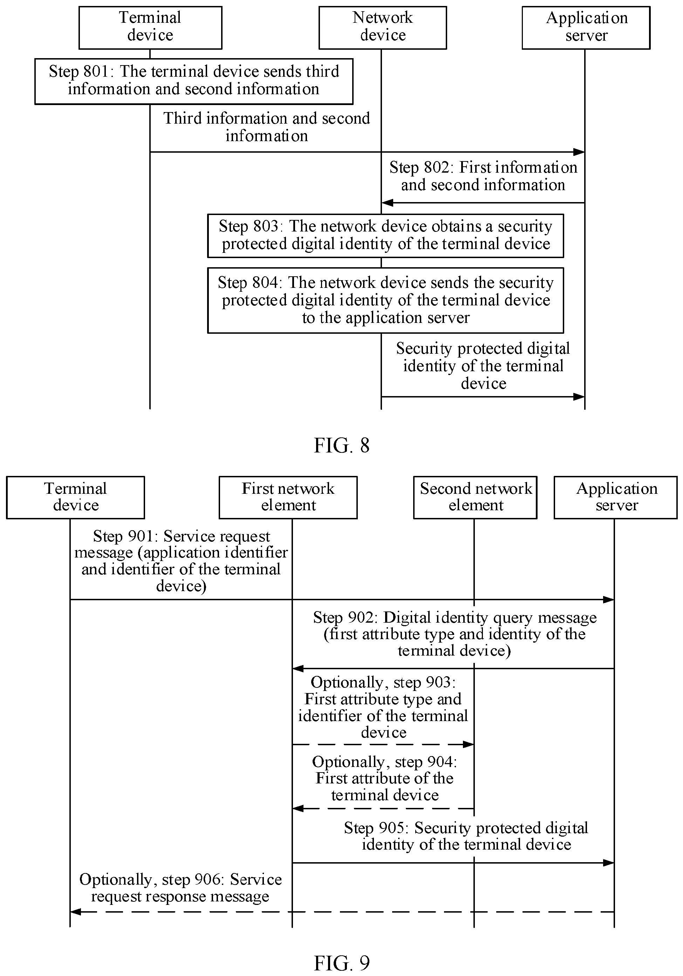

FIG. 8 is a schematic flowchart of a communication method according to an embodiment of this application.

Step 801: A terminal device sends third information and second information.

Correspondingly, an application server receives the third information and the second information.

The third information indicates a service requested by the terminal device. For example, the third information is an application identifier corresponding to the service requested by the terminal device.

In this application, the second information indicates the terminal device. For example, the second information is an identifier of the terminal device.

How the terminal device sends the third information and the second information is not limited in this application. For example, the terminal device may send the third information and the second information through a service request message.

Step 802: The application server sends first information and the second information to a network device.

Correspondingly, the network device receives the first information and the second information.

The first information is determined based on the third information. In an implementation, the first information is the third information. In other words, the first information is the application identifier.

In another implementation, the first information is a first attribute type corresponding to the application identifier, and a correspondence between the application identifier and the first attribute type is preset, or may be determined by the application server.

Step 803: The network device obtains a security protected digital identity of the terminal device.

The network device may determine a first attribute of the terminal device based on the first information and the second information, and determine the digital identity of the terminal device based on the first attribute. For specific content of step 803, refer to the descriptions in step 203. Details are not described herein again.

Step 804: The network device sends the security protected digital identity of the terminal device to the application server, where the digital identity is used to access a service of the application server.

Correspondingly, the application server receives the security protected digital identity of the terminal device.

The application server may verify the security protected digital identity. If the application server determines that the digital identity of the terminal device is valid, and determines, based on the first attribute in the digital identity, that the terminal device can access the service of the application server, the application server may provide a service corresponding to the application identifier for the terminal device. For a specific process, refer to the descriptions in step 204. Details are not described herein again.

For specific content of step 804, refer to the descriptions in step 204. Details are not described herein again.

In the foregoing procedure, when the terminal device requests the service from the application server, the application server obtains the digital identity of the terminal device via the network device, to determine, based on the digital identity of the terminal device, whether the terminal device can access the service in the application server. In the entire procedure, the terminal device does not need to participate in a digital identity obtaining procedure, so that complexity of the terminal device can be reduced, and overheads of the terminal device can be reduced.

A first network element (for example, an SMF network element), a second network element (for example, a UDM network element), and a third network element (for example, an NEF network element) respectively perform some functions of the network device in the procedure in FIG. 8. Specifically, FIG. 9 is a schematic flowchart of a communication method according to an embodiment of this application. In this procedure, an example in which first information is a first attribute type, second information is an identifier of a terminal device, and third information is an application identifier is used for description.

Step 901: The terminal device sends a service request message to an application server, where the service request message includes the application identifier and the identifier of the terminal device.

The service request message is used to request a service corresponding to the application identifier.

Step 902: The application server sends a digital identity query message to the first network element, where the digital identity query message indicates to report a digital identity of the terminal device.

The digital identity query message includes the first attribute type corresponding to the application identifier and the identifier of the terminal device.

If the first network element determines that a first attribute corresponding to the first attribute type is not included, step 903 may be performed. If the first network element determines that the first attribute corresponding to the first attribute type is included, step 905 may be directly performed.

Optionally, step 903: The first network element sends an attribute query request message to the second network element, where the attribute query request message includes the first attribute type and the identifier of the terminal device.

The attribute query request message may be used to request the first attribute that is in an attribute of the terminal device and that corresponds to the first attribute type.

Optionally, step 904: The second network element sends the first attribute of the terminal device to the first network element.

There may be a plurality of implementations of how the second network element obtains the first attribute of the terminal device based on the first attribute type and the identifier of the terminal device. For details, refer to the descriptions in step 403. Details are not described herein again.

Step 905: The first network element determines the digital identity of the terminal device based on the first attribute, and sends the security protected digital identity of the terminal device to the application server.

The security protected digital identity of the terminal device includes the identifier of the terminal device and the first attribute, and may further include information such as a certification credential. For details, refer to the descriptions in step 203. Details are not described herein again.

The application server may verify the security protected digital identity. If the application server determines that the digital identity of the terminal device is valid, and determines, based on the first attribute in the digital identity, that the terminal device can access a service of the application server, the application server may provide the service corresponding to the application identifier for the terminal device. For a specific process, refer to the descriptions in step 204. Details are not described herein again.

Optionally, step 906: The application server sends a service request response message to the terminal device, where the service request response message may indicate that the application server agrees to provide the service corresponding to the application identifier for the terminal device.

It may be understood that, to implement the functions in the foregoing embodiments, the first network element, the terminal device, the second network element, or the application server includes a corresponding hardware structure and/or software module for performing the functions. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

The following are diagrams of possible structures of communication apparatuses according to embodiments of this application. These communication apparatuses may be configured to implement the functions of the first network element, the terminal device, the second network element, or the application server in the foregoing method embodiments, and therefore can also achieve beneficial effects of the foregoing method embodiments.

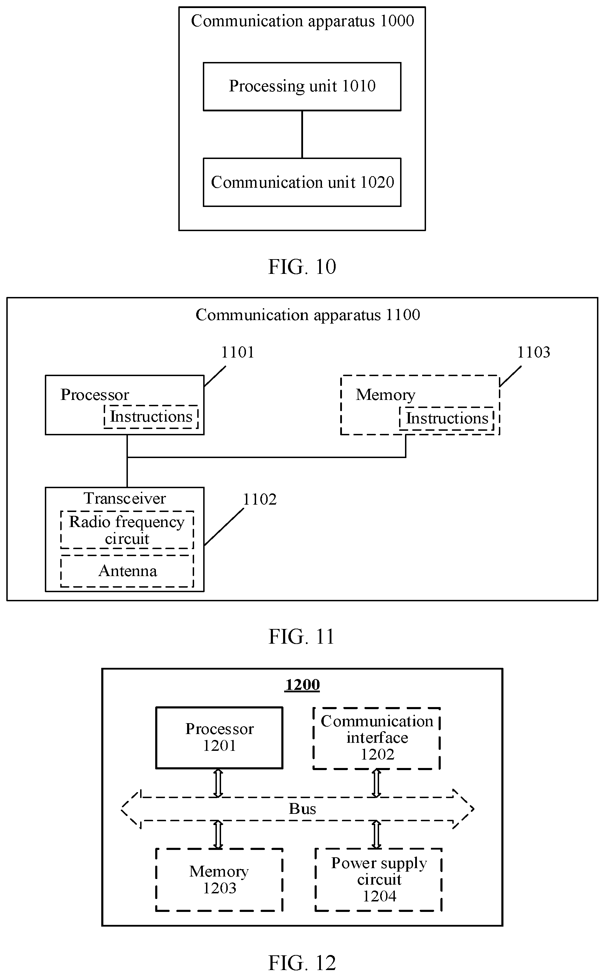

As shown in FIG. 10, a communication apparatus 1000 includes a processing unit 1010 and a communication unit 1020. The communication apparatus 1000 is configured to implement the functions of the first network element, the terminal device, the second network element, or the application server in the foregoing method embodiments.

When the communication apparatus 1000 is configured to implement the functions of the first network element,
the communication unit is configured to receive first information and second information, where the first information is used to determine a first attribute type, and the second information indicates a terminal device;
the processing unit is configured to obtain a security protected digital identity of the terminal device, where the digital identity includes a first attribute corresponding to the first attribute type; and
the communication unit is configured to send the security protected digital identity.

When the communication apparatus 1000 is configured to implement the functions of the terminal device,
the processing unit is configured to send first information and second information by using the communication unit, where the first information is used to determine a first attribute type, and the second information indicates the terminal device;
the processing unit is configured to receive, by using the communication unit, a security protected digital identity of the terminal device, where the digital identity includes a first attribute corresponding to the first attribute type; and
the processing unit is configured to send the security protected digital identity to an application server by using the communication unit, where the first attribute is used to verify whether a service of the application server can be accessed.

When the communication apparatus 1000 is configured to implement the functions of the second network element,
the processing unit is configured to receive first information and second information from a first network element by using the communication unit, where the first information is used to determine a first attribute type, and the second information indicates a terminal device; and
the processing unit is configured to: send, to the first network element by using the communication unit, a first attribute that is in an attribute of the terminal device and that corresponds to the first attribute type; or send third indication information to the first network element, where the third indication information indicates a fourth network element, and the fourth network element is an issuer of the first attribute.

For more detailed descriptions about the processing unit 1010 and the communication unit 1020, directly refer to related descriptions in the foregoing method embodiments. Details are not described herein.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be a processor, and may be an integrated circuit having a signal processing capability. In an implementation process, operations in the foregoing methods or the foregoing units may be implemented by using a hardware integrated logic circuit in a processor element, or may be implemented in a form of software invoked by a processing element.

In an example, a unit in any one of the foregoing apparatuses may be one or more integrated circuits configured to implement the foregoing methods, for example, one or more application specific integrated circuits (application specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

In another possible product form, the first network element, the terminal device, the second network element, or the application server in embodiments of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a terminal device, or a chip or chip system in the terminal device. Alternatively, the communication apparatus 1100 may be a network device, or a chip or module in the network device. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user.

Optionally, the processor 1101, the transceiver 1102, and the memory 1103 may be connected through a communication bus.

When the communication apparatus is powered on, the processor 1101 may read the software program in the memory 1103, interpret and execute instructions of the software program, and process data of the software program. When data needs to be sent in a wireless manner, the processor 1101 performs baseband processing on the to-be-sent data, and then outputs a baseband signal to the radio frequency circuit. The radio frequency circuit performs radio frequency processing on the baseband signal, and then sends a radio frequency signal to the outside in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independently of the processor for baseband processing. For example, in a distributed scenario, the radio frequency circuit and the antenna may be disposed remotely independent of the communication apparatus.

In some embodiments, in terms of hardware implementation, a person skilled in the art may figure out that the communication apparatus 1000 may be in a form of the communication apparatus 1100 shown in FIG. 11.

In an example, a function/implementation process of the processing unit 1010 in FIG. 10 may be implemented, by invoking computer-executable instructions stored in the memory 1103, by using the processor 1101 in the communication apparatus 1100 shown in FIG. 11. A function/implementation process of the communication unit 1020 in FIG. 10 may be implemented by using the transceiver 1102 in the communication apparatus 1100 shown in FIG. 11.

In still another possible product form, the first network element, the terminal device, the second network element, or the application server in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the apparatus 1200 may be caused to implement the method provided in any one of the foregoing embodiments and any possible design thereof. Alternatively, the processor 1201 is configured to implement, by using a logic circuit or by executing code instructions, the method provided in any one of the foregoing embodiments and any possible design thereof.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201, or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store the related program instructions and/or data that are/is required. It should be noted that the memory 1203 may exist independently of the processor 1201, or may be integrated with the processor 1201. The memory 1203 may be located in the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus, and parts of the communication apparatus 1200 may be interconnected through the bus.

In some embodiments, in terms of hardware implementation, a person skilled in the art may figure out that the communication apparatus 1000 shown in FIG. 10 may be in a form of the communication apparatus 1200 shown in FIG. 12.

In an example, a function/implementation process of the processing unit 1010 in FIG. 10 may be implemented, by invoking computer-executable instructions stored in the memory 1203, by using the processor 1201 in the communication apparatus 1200 shown in FIG. 12. A function/implementation process of the communication unit 1020 in FIG. 10 may be implemented by using the communication interface 1202 in the communication apparatus 1200 shown in FIG. 12.

It should be noted that the structure shown in FIG. 12 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

When the communication apparatus is a chip used in the terminal, the chip in the terminal implements the functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to a terminal. The module in the base station herein may be a baseband chip in the base station, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, digital signal processor (Digital Signal Processor, DSP), application specific integrated circuit (Application Specific Integrated Circuit, ASIC), field programmable gate array (Field Programmable Gate Array, FPGA), or another programmable logic device, transistor logic device, hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a portable hard drive, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement embodiments, all or a part of the embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that these modifications and variations fall within the scope of the claims of this application and equivalent technologies of the claims.

## Claims

1. A communication method, comprising:
receiving first information and second information, wherein the first information is used to determine a first attribute type, and the second information indicates a terminal device;
obtaining a security protected digital identity of the terminal device, wherein the digital identity comprises a first attribute corresponding to the first attribute type; and
sending the security protected digital identity.

2. The method according to claim 1, wherein the first information is an application identifier, and the application identifier corresponds to the first attribute type; or
the first information is an identifier of the first attribute type.

3. The method according to claim 1 or 2, wherein the method further comprises:
receiving a first identifier and an access credential, wherein a management module corresponding to the first identifier is configured to manage one or more attributes of the terminal device, and the one or more attributes comprise the first attribute; and
if verification of the access credential succeeds, obtaining the first attribute from the management module corresponding to the first identifier.

4. The method according to claim 3, wherein the method further comprises:
receiving first indication information and second indication information from the terminal device, wherein the second indication information indicates the one or more attributes, the first indication information indicates a network side to manage the one or more attributes indicated by the second indication information, and the one or more attributes comprise the first attribute; and
creating the management module, wherein the management module is configured to manage the one or more attributes.

5. The method according to claim 4, wherein the method further comprises:
sending the first identifier and the access credential to the terminal device.

6. The method according to claim 1 or 2, wherein the method further comprises:
obtaining the first attribute from a second network element based on the first information and the second information.

7. The method according to claim 1 or 2, wherein the method further comprises:
sending the first information and the second information to a second network element;
receiving third indication information from the second network element, wherein the third indication information indicates a fourth network element, and the fourth network element is an issuer of the first attribute; and
obtaining the first attribute from the fourth network element based on the third indication information.

8. A communication method, comprising:
sending first information and second information, wherein the first information is used to determine a first attribute type, and the second information indicates a terminal device;
receiving a security protected digital identity of the terminal device, wherein the digital identity comprises a first attribute corresponding to the first attribute type; and
sending the security protected digital identity to an application server, wherein the first attribute is used to access a service of the application server.

9. The method according to claim 8, wherein the first information is an application identifier, and the application identifier corresponds to the first attribute type; or
the first information is an identifier of the first attribute type.

10. The method according to claim 8 or 9, wherein the method further comprises:
sending a service request message to the application server, wherein the service request message is used to request the service; and
receiving a digital identity query message from the application server, wherein the digital identity query message indicates to report the digital identity, and the digital identity query message comprises the first information.

11. The method according to any one of claims 8 to 10, wherein the method further comprises:
sending first indication information and second indication information, wherein the second indication information indicates one or more attributes, the first indication information indicates a network side to manage the one or more attributes indicated by the second indication information, and the one or more attributes comprise the first attribute.

12. The method according to claim 11, wherein the method further comprises:
receiving a first identifier and an access credential, wherein a management module corresponding to the first identifier is configured to manage the one or more attributes.

13. The method according to claim 12, wherein before the receiving the security protected digital identity of the terminal device, the method further comprises:
sending the first identifier and the access credential.

14. A communication method, comprising:
receiving first information and second information from a first network element, wherein the first information is used to determine a first attribute type, and the second information indicates a terminal device; and
sending, to the first network element, a first attribute that is in an attribute of the terminal device and that corresponds to the first attribute type; or
sending third indication information to the first network element, wherein the third indication information indicates a fourth network element, and the fourth network element is an issuer of the first attribute.

15. The method according to claim 14, wherein the method further comprises:
receiving a first correspondence from an application server, wherein the first correspondence indicates a correspondence between an application identifier and the first attribute type.

16. The method according to claim 15, wherein the first information is an application identifier, and the method further comprises:
determining the first attribute type based on the application identifier and the first correspondence.

17. The method according to claim 14, wherein the first information is an identifier of the first attribute type.

18. A communication method, comprising:
receiving, from a terminal device, a security protected digital identity of the terminal device, wherein the digital identity comprises a first attribute; and
verifying, based on the first attribute, whether the terminal device can access a service.

19. The method according to claim 18, wherein the security protected digital identity of the terminal device is in a service request message, and a service requested by the service request message is associated with the first attribute.

20. The method according to claim 18 or 19, wherein before the receiving the security protected digital identity of the terminal device, the method further comprises:
receiving the service request message from the terminal device, wherein the service requested by the service request message is associated with the first attribute; and sending a digital identity query message to the terminal device, wherein the digital identity query message indicates to report the digital identity, the digital identity query message comprises first information, the first information is used to determine a first attribute type, and the first attribute type corresponds to the first attribute.

21. The method according to any one of claims 18 to 20, wherein before the receiving, from the terminal device, the security protected digital identity of the terminal device, the method further comprises:
sending a first correspondence to a second network element, wherein the first correspondence indicates a correspondence between an application identifier and the first attribute type.

22. A communication method, comprising:
receiving first information and second information, wherein the first information is used to determine a first attribute type, and the second information indicates a terminal device;
determining, based on the first information and the second information, a first attribute that is in an attribute of the terminal device and that corresponds to the first attribute type; and
sending the first attribute.

23. The method according to claim 22, wherein the first information is an application identifier, and the application identifier corresponds to the first attribute type; or the first information is an identifier of the first attribute type.

24. The method according to claim 22 or 23, wherein before the determining, based on the first information and the second information, the first attribute that is in the attribute of the terminal device and that corresponds to the first attribute type, the method further comprises:
receiving a first identifier and an access credential, wherein a management module corresponding to the first identifier is configured to manage one or more attributes of the terminal device, and the one or more attributes comprise the first attribute; and
if verification of the access credential succeeds, obtaining the first attribute from the management module corresponding to the first identifier.

25. The method according to any one of claims 22 to 24, wherein before the receiving the first information and the second information, the method further comprises:
receiving first indication information and second indication information from the terminal device, wherein the second indication information indicates the one or more attributes, the first indication information indicates a network side to manage the one or more attributes indicated by the second indication information, and the one or more attributes comprise the first attribute; and
creating the management module, wherein the management module is configured to manage the one or more attributes.

26. The method according to claim 25, wherein after the creating the management module, the method further comprises:
sending the first identifier and the access credential to the terminal device.

27. The method according to any one of claims 22 to 26, wherein after the receiving the first information and the second information, the method further comprises:
obtaining the first attribute from a second network element based on the first information and the second information.

28. The method according to any one of claims 22 to 27, wherein after the receiving the first information and the second information, the method further comprises:
sending the first information and the second information to a second network element;
receiving third indication information from the second network element, wherein the third indication information indicates a fourth network element, and the fourth network element is an issuer of the first attribute; and
obtaining the first attribute from the fourth network element based on the third indication information.

29. A communication method, comprising:
receiving a first attribute, wherein the first attribute is an attribute that is in an attribute of a terminal device and that corresponds to the first attribute type;
obtaining a digital identity of the terminal device, wherein the digital identity comprises the first attribute; and
sending the security protected digital identity to an application server, wherein the first attribute is used to access a service of the application server.

30. The method according to claim 29, wherein the first information is an application identifier, and the application identifier corresponds to the first attribute type; or the first information is an identifier of the first attribute type.

31. A communication apparatus, comprising a module configured to perform the method according to any one of claims 1 to 7, a module configured to perform the method according to any one of claims 8 to 13, a module configured to perform the method according to any one of claims 14 to 17, a module configured to perform the method according to any one of claims 18 to 21, a module configured to perform the method according to any one of claims 22 to 28, or a module configured to perform the method according to either of claims 29 and 30.

32. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement, by using a logic circuit or by executing code instructions, the method according to any one of claims 1 to 7, the method according to any one of claims 8 to 13, the method according to any one of claims 14 to 17, the method according to any one of claims 18 to 21, the method according to any one of claims 22 to 28, or the method according to either of claims 29 and 30.

33. A computer-readable storage medium, wherein the storage medium stores a computer program or instructions, and when the computer program or the instructions are executed by a communication apparatus, the method according to any one of claims 1 to 7, the method according to any one of claims 8 to 13, the method according to any one of claims 14 to 17, the method according to any one of claims 18 to 21, the method according to any one of claims 22 to 28, or the method according to either of claims 29 and 30 is implemented.

34. A computer program product, wherein when the computer program product is executed by a computer, the computer performs the method according to any one of claims 1 to 7, the method according to any one of claims 8 to 13, the method according to any one of claims 14 to 17, the method according to any one of claims 18 to 21, the method according to any one of claims 22 to 28, or the method according to either of claims 29 and 30.

35. A communication system, comprising one or more of the following apparatuses:
a first network element, a terminal device, and a second network element, wherein
the first network element is configured to perform the method according to any one of claims 1 to 7, the terminal device is configured to perform the method according to any one of claims 8 to 13, and the second network element is configured to perform the method according to any one of claims 14 to 17.

36. A communication system, comprising one or more of the following apparatuses:
an application server, a first network element, and a terminal device, wherein
the application server is configured to perform the method according to any one of claims 18 to 21, the first network element is configured to perform the method according to any one of claims 22 to 28, and the terminal device is configured to perform the method according to either of claims 29 and 30.
